(19) Europäisches Patentamt

European Patent Office

Office européen des brevets

(11) Veröffentlichungsnummer: **0 356 674 B1**

(12) **EUROPÄISCHE PATENTSCHRIFT**

(45) Veröffentlichungstag der Patentschrift: **02.12.92**

(21) Anmeldenummer: **89112912.4**

(22) Anmeldetag: **14.07.89**

(51) Int. Cl.⁵: **C09C 1/00**

(54) Verfahren zur Herstellung graugrüner Farbkörper auf der Basis Zirkonsilikat-Vanadiumoxid.

(30) Priorität: **10.08.88 DE 3827068**

(43) Veröffentlichungstag der Anmeldung:
**07.03.90 Patentblatt 90/10**

(45) Bekanntmachung des Hinweises auf die
Patenterteilung:
**02.12.92 Patentblatt 92/49**

(84) Benannte Vertragsstaaten:
**BE CH DE ES FR GB IT LI NL SE**

(56) Entgegenhaltungen:
**US-A- 2 441 447**

(73) Patentinhaber: **DEGUSSA AKTIENGESELL-
SCHAFT
Weissfrauenstrasse 9
W-6000 Frankfurt 11(DE)**

(72) Erfinder: **Speer, Dietrich, Dr.
Grünaustrasse 5
W-6450 Hanau 9(DE)**
Erfinder: **Kiss, Akos, Dr.
Odenwaldstrasse 16
W-8755 Wasserlos(DE)**
Erfinder: **Kleinschmit, Peter, Dr.
Wildaustrasse 19
W-6450 Hanau 9(DE)**

## Beschreibung

Die Erfindung betrifft ein Verfahren zur Herstellung graugrüner Farbkörper auf der Basis Zirkonsilikat-Vanadiumoxid durch Glühen eines Gemisches aus Zirkonoxid Siliziumoxid, Vanadiumoxid und Lithiumverbindungen bei Temperaturen oberhalb 600° C.

Auf der Basis des Zirkonsilikats gibt es eine Reihe von Farbkörpern, bei denen in das Gitter des Zirkonsilikats färbende Metallionen eingebaut sind, wie z.B. Zirkon-Praseodym-Gelb oder Zirkon-Vanadin-Blau.

In der US-PS 2441 447 werden auf der Basis Zirkonsilikat-Vanadiumoxid blaue und grüne Farbkörper beschrieben, die durch Glühen von Zirkonium-, Silizium- und Vanadiumverbindungen bei Temperaturen oberhalb 550° C hergestellt werden. Im Falle der blauen Farbkörper enthalten die Ansätze neben bis zu 17 Gew. % Vanadiumoxid noch bis zu 5 Gew. % Alkalioxid. Grüne Pigmente entstehen nur in Abwesenheit von Alkalioxiden und bestehen aus einem Gemisch von vanadiumdotiertem gelbem Zirkonoxid, vanadiumdotiertem blauen Zirkonsilikat und Siliziumoxid. Es handelt sich also um ein Farbkörpergemisch und nicht um einen einheitlichen Farbkörpertyp, wie er aus anwendungstechnischen Gründen wünschenswert wäre.

In der Firmenschrift der Firma Th. Goldschmidt 2/83 Nr. 59 wird auf Seite 13 über Zirkon-Vanadiumblau-Farbkörper berichtet. Hiernach sind verschiedene Na-Salze, wie NaF, NaCl, $Na_2CO_3$, $Na_2SO_4$, $NaNO_3$, als Flußmittel zur Herstellung des bekannten Zirkon-Vanadin-Blaus sehr effektiv; demgegenüber ergeben die entsprechenden Li- und K-Salze meistens grünlich-blau gefärbte Pigmente. Dieses Dokument gibt keinen Hinweis auf die Bildung graugrüner Zirkon-Vanadin-Farbkörper.

Es war daher die Aufgabe der vorliegenden Erfindung, ein Verfahren zur Herstellung graugrüner Farbkörper auf der Basis Zirkonsilikat-Vanadiumoxid durch Glühen eines Gemisches aus Zirkonium-, Silizium-, Vanadium-und Lithiumverbindungen bei Temperaturen oberhalb 600° C zu entwickeln, bei dem ein einheitlicher graugrüner Farbkörpertyp mit einem Zirkonsilikat-Gitter entsteht.

Gefunden wurde ein Verfahren zur Herstellung graugrüner Farbkörper auf der Basis Zirkonsilikat-Vanadiumoxid durch Glühen eines Gemisches aus Zirkonoxid und Siliziumoxid im Molverhältnis von etwa 1 : 1 unter Zugabe von Vanadiumoxid, insbesondere in Form von Ammoniumvanadat, und Lithiumverbindungen bei Temperaturen oberhalb 600° C, das dadurch gekennzeichnet ist, daß die zugesetzte Menge an Vanadiumoxid, berechnet als $V_2O_5$, mehr als 17 Gew.-% beträgt, und soviel an Lithiumverbindungen zugegeben wird, daß das Atomverhältnis Li/Li + V, berechnet als Metall, zwischen 0,1 und 0,5 liegt. Vorteilhafterweise sollte das Atomverhältnis Li/Li + V zwischen 0,2 und 0,4 liegen.

Bei mehrstündigem Glühen von erfindungsgemäß zusammengesetzten Gemischen erhält man einen graugrünen Farbkörper, der ausschließlich aus Zirkonsilikat besteht. Gegebenenfalls kann als Mineralisator noch ein Natriumsalz zugegen sein.

Folgende Beispiele sollen das erfindungsgemäße Verfahren näher erläutern:

1. 59,6 g Zirkonoxid ($ZrO_2$), 29,85 g Siliziumoxid ($SiO_2$), 20,53 g Vanadiumoxid ($V_2O_5$), 2,32 g Natriumchlorid und 2,92 g Natriumfluorid als Mineralisatoren werden mit 3,3 g Lithiumcarbonat vermischt und das Gemenge 1 Stunde bei 800° C geglüht. Man erhält einen graugrünen Farbkörper, der aus Zirkonsilikat besteht, wie röntgenographisch feststellbar ist.

2. Zu 59,6 g Zirkonoxid und 29,85 g Siliziumoxid werden 28,31 g Ammoniumvanadat ($NH_4VO_3$) und 3,3 g Lithiumcarbonat zugemischt. Nach einstündigem Glühen bei 800° C erhält man ebenfalls ein graugrünes Produkt.

Die so hergestellten Farbkörper eignen sich besonders zum Einfärben von Glasuren. Das Atomverhältnis Li/Li + V des zu glühenden Gemisches beträgt in Beispiel 1 0,2835, in Beispiel 2 0,2695.

## Patentansprüche

1. Verfahren zur Herstellung graugrüner Farbkörper auf der Basis Zirkonsilikat-Vanadiumoxid durch Glühen eines Gemisches aus Zirkonoxid und Siliziumoxid im Molverhältnis von etwa 1 : 1 unter Zugabe von Vanadiumoxid, insbesondere in Form von Ammoniumvanadat, und Lithiumverbindungen bei Temperaturen oberhalb 600 °C,
dadurch gekennzeichnet,
daß die zugesetzte Menge an Vanadiumoxid, berechnet als $V_2O_5$, mehr als 17 Gew.-% beträgt, und soviel an Lithiumverbindungen zugegeben wird, daß das Atomverhältnis Li/Li + V, berechnet als Metall, zwischen 0,1 und 0,5 liegt.

2. Verfahren nach Anspruch 1,
dadurch gekennzeichnet,
daß das Atomverhältnis Li/Li + V zwischen 0,2 und 0,4 liegt.

3. Verfahren nach Anspruch 1 oder 2,
dadurch gekennzeichnet,
daß in dem zu glühenden Gemisch zusätzlich ein Natriumsalz als Mineralisator, vorzugsweise Natriumchlorid und Natriumfluorid, zugegen ist.

## Claims

1. A process for the preparation of grey green pigments based on zirconium silicate/vanadium oxide by annealing a mixture of zirconium oxide and silicon oxide in a molar ratio of about 1:1 with the addition of vanadium oxide, in particular in the form of ammonium vanadate, and lithium compounds at temperatures above 600°C, characterised in that the quantity of vanadium oxide added, calculated as $V_2O_5$, is more than 17% by weight, and the quantity of lithium compounds added is such that the atomic ratio Li/Li + V, calculated as metal, is from 0.1 to 0.5.

2. A process according to Claim 1, characterised in that the atomic ratio Li/Li + V is from 0.2 to 0.4.

3. A process according to Claim 1 or 2, characterised in that a sodium salt, preferably sodium chloride and sodium fluoride, is also present as mineralizer in the mixture to be annealed.

## Revendications

1. Procédé d'obtention de pigments gris/verts à base de silicate de zirconium et d'oxyde de vanadium par calcination d'un mélange à base d'oxyde de zirconium et d'oxyde de silicium dans un rapport molaire d'environ 1 : 1, en ajoutant de l'oxyde de vanadium, en particulier sous la forme de vanadate d'ammonium et des composés du lithium, à des températures au-dessus de 600° C,
caractérisé en ce que la quantité ajoutée d'oxyde de vanadium calculée en tant que $V_2O_5$, s'élève à plus de 17 % en poids et qu'on ajoute une quantité de composés du lithium telle que le rapport atomique Li/Li + V calculé sous forme de métal, se situe entre 0,1 et 0,5.

2. Procédé selon la revendication 1, caractérisé en ce que le rapport atomique Li/Li + V se situe entre 0,2 et 0,4.

3. Procédé selon la revendication 1 ou 2, caractérisé en ce que dans le mélange à calciner en outre un sel de sodium comme agent minéralisateur est présent, de préférence le chlorure de sodium et le fluorure de sodium.